# EUROPEAN PATENT APPLICATION

(11) **EP 4 501 824 A1**
(43) Date of publication of application: **05.02.2025**
(21) Application number: 23754342.6
(22) Date of filing: 03.07.2023
(51) Int. Cl.: B65G 61/00, B65B 11/04

(54) **AUTOMATIC PALLETIZING SYSTEM FOR METAL PARTS**

(71) Applicant: Tecoi Corte, S.L., 24812 Sahelices de Sabero-León (ES)
(72) Inventor: MALLO MARINELLI, Jose Luis, 24812 Sahelices de Sabero (LEÓN) (ES)
(74) Representative: Pons Ariño, Angel
(86) International application number: PCT/ES2023/070424
(87) International publication number: WO 2024/079368

(57) **Abstract**

**The** palletizing system comprises a series of modules interconnected to each other. **It** has a central part having a first zone on which parts handling means are arranged, which may consist of a robot or a conveyor means and, in both embodiments, in combination with palletizers, a feeding module is arranged on one side of the central zone which is followed by scanning means. After said first zone of the central part a second zone or intermediate zone is arranged which has two facing palletizing modules arranged on either side of the central part and after them tray storage modules. Finally, the central part has a wrapping, weighing and labelling module followed by an outlet and loading module or zone. **The** system allows the automated arrangement of the metal parts on a pallet.

## Description

### OBJECT OF THE INVENTION

The object of the present invention, as the title establishes, is an automatic palletizing system for metal parts.

The present invention is characterized by the special design and configuration of each and every one of the elements and means used in the palletizing system, so that it allows, according to pre-set criteria, to proceed with the automated arrangement of the metal parts on a pallet.

This system is characterized by an automatic processing of parts by means of an intelligent recognition system, based on three-dimensional geometry and not on a scanned QR code or any other method of identification labelling.

The system has an internal buffer to pre-organize the morphology of the dispatch batch according to different parameters (e.g. weight, dimensions, positions, center of gravity, priority, destination, etc.) established by the user in a specific management software during the definition of the dispatch batch.

Therefore, the present invention belongs to the field of automatic palletizing systems.

### BACKGROUND OF THE INVENTION

palletizing systems of products, boxes, packaging and so on are known in the prior art, which allow the arrangement of said products on a pallet according to a series of criteria.

The palletizing process is complicated for application to metal parts such as steel plates and the like, since they are complex products to handle due to their high weight and different geometry.

Document CN 110641790 B is known in the prior art, which discloses a stacking and wrapping system wherein the stacking and wrapping system comprises a connection conveying line, a bundling mechanism, a strapping mechanism, a stacking mechanism and a wrapping mechanism, wherein the connection conveying line, the bundling mechanism, the strapping mechanism, the stacking mechanism and the wrapping mechanism are connected in sequence.

Therefore, the object of the present invention is to develop a system for palletizing metal parts.

### DESCRIPTION OF THE INVENTION

The object of the present invention is essentially contained in the independent claim and the different embodiments are contained in the dependent claims.

The present invention relates to an automatic palletizing system for metal parts that have different weights and geometries according to previously established criteria.

Each metal part received from the cutting outlet or from various possible sources is placed manually or automatically in an inlet bay. From there, they undergo a subsequent scan with a software that analyses the morphology of the part and its spatial orientation.

The part is then collected for temporary storage in organizing trays, allowing processing of multiple packages at the same time. The system allows handling multiple containers according to the desired parameters: thickness, destination, part contour, type of work, etc.

Palletizing is completed when a chosen feature reaches its limit value, such as number of parts, weight, etc. Then, each pallet is wrapped in film, weighed in a load cell, labelled and extracted to the shipping area, ready to begin transport to its destination.

The palletizing system can be adapted to different production plants and coordinated with the actual material flow and processing. There are versions for standard pallets (1200 x 1200 mm), for Europallets (1200 x 800 mm) and for specific containers according to customer requirements.

The system consists of a series of connected stations through which the parts pass. After reception from the cutting outlet or from various possible sources, each part can go through a post-processing (deburring, flattening, etc.) before entering the palletizing system.

The palletizing system comprises a series of modules interconnected to each other. It has a central part that has a first zone on which part handling means are arranged, which can either consist of a robot collecting or stacking the parts on trays or a conveyor means; in both embodiments, work is performed in combination with palletizers using either a robot or a conveyor, which allows the stacked arrangement of the parts on pallets. On one side of the central zone is arranged a feeding module that is followed by scanning means, and opposite and on the other side of the central zone is arranged an area for rejection of invalid parts. After said first zone of the central part, a second zone or intermediate zone is arranged that has two facing palletizing modules and after them some tray storage modules; finally, the central part has a wrapping, weighing and labelling module followed by an outlet and boarding module or zone.

The feeding module manages the entry of parts into the system. It is a combination of loading docks, which can receive parts manually from a robot or from a previous process, such as a deburrer, a flattening system or any other previous process compatible with the system. The multiple feeding system manages the release ramps or belts as well as the conveyor, where the parts are automatically placed in any order or direction, so that there is a continuous flow of material towards the scanning module at the entrance of the robotic cell.

The scanning means are arranged next to the feeding module and are responsible for identifying the contour, position, performing dimensional verification and thickness measurement, accepting or discarding parts according to their geometry and the manufacturing tolerances. The identified parts are compared to a part database with work orders in process.

In a first embodiment the handling means consist of a picker or stacker robot that selects, orients and places the parts on each tray, which are elements for the arrangement of the parts for temporary storage.

In a second embodiment the means for handling the parts consist of the use of a conveyor means.

In both embodiments, either using a robot or a conveyor, work is performed in combination with palletizers, which allows the stacked arrangement of the parts on pallets.

The rejection area is where parts are stored if they do not match the parts database or have geometric deviations.

The tray storage modules are the places where the trays are stacked, but separated from each other. Parts with the same characteristics (thickness, destination, contour etc.) are stored in each tray according to a nesting of several storage levels designated by the government software, until palletizing can begin.

The palletizing modules are the places where the parts temporarily stored in the trays are placed stacked on pallets. The contents of the trays are placed on the pallet according to the order algorithm, until a certain predefined value is reached (number of parts, maximum weight, etc.). The pallet is then carefully transported to the next process. This process combines the tray holders with a magnetic or vacuum lift for classification in layers on the pallet. Depending on the palletizing criteria established in the system, it may be possible to palletize individual parts, and not necessarily a group.

The wrapping, weighing and labelling module is a module where the pallet is wrapped by rotation. The pallet is wrapped in a film to immobilize and compact it as a perfectly neat and solid package. The wrapper rotates around the pallet and then the pallet is weighed with a scale. Finally, the wrapped pallet is labelled with the desired information (serial number, date, destination, weight etc.).

The outlet and loading module is the place where a pallet that is ready is automatically moved to for shipment, which allows the previous stations to continue operating without unwanted stops.

Thanks to the features described, a system is achieved in which a palletizing of metal parts takes place according to pre-set criteria, where the palletizing process is carried out continuously, without interruptions and safely.

Unless indicated otherwise, all the technical and scientific elements used in this specification have the meaning usually understood by a person skilled in the art to which this invention belongs. In the practice of this invention, methods and materials similar or equivalent to those described in the specification may be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### EXPLANATION OF THE FIGURES

In order to complement the description being made herein, and with the object of aiding the better understanding of the characteristics of the invention, in accordance with a preferred practical embodiment thereof, said description is accompanied, as an integral part thereof, by a set of drawings where, in an illustrative and non-limiting manner, the following has been represented:
Figure 1 shows a plan view of the automatic palletizing system for metal parts.
Figure 2 shows a side view of the system shown above.
Figure 3 shows a plan view of the palletizing system in a complementary embodiment.

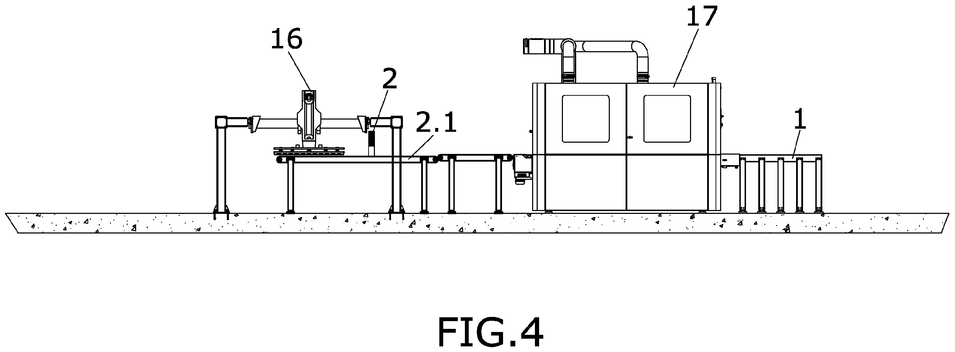

Figure 4 shows the section obtained by cutting the plan view of figure 3 along a plane A-A.

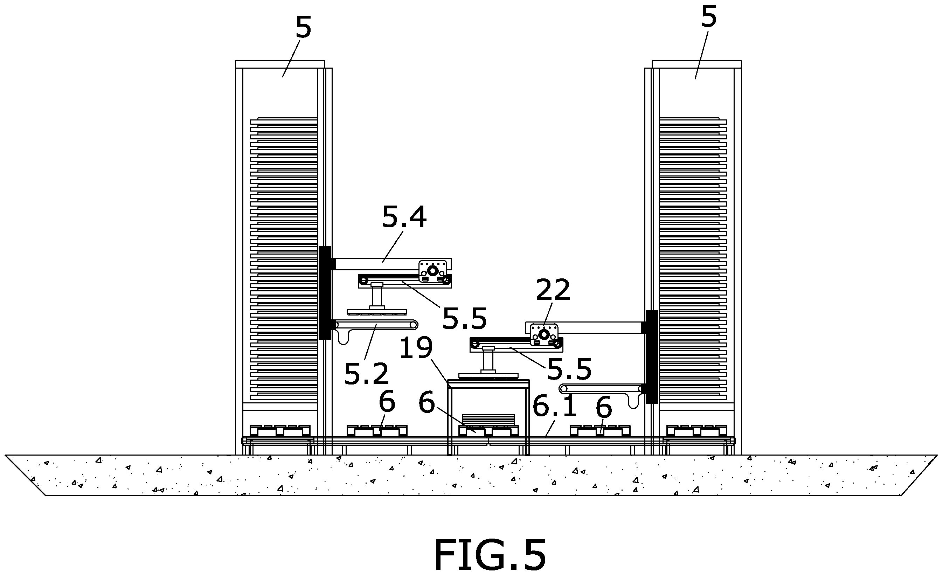

Figure 5 shows the section obtained by cutting the plan view of figure 3 along a plane B-B.

### PREFERRED EMBODIMENT OF THE INVENTION

In view of the figures, a preferred embodiment of the proposed invention is described below.

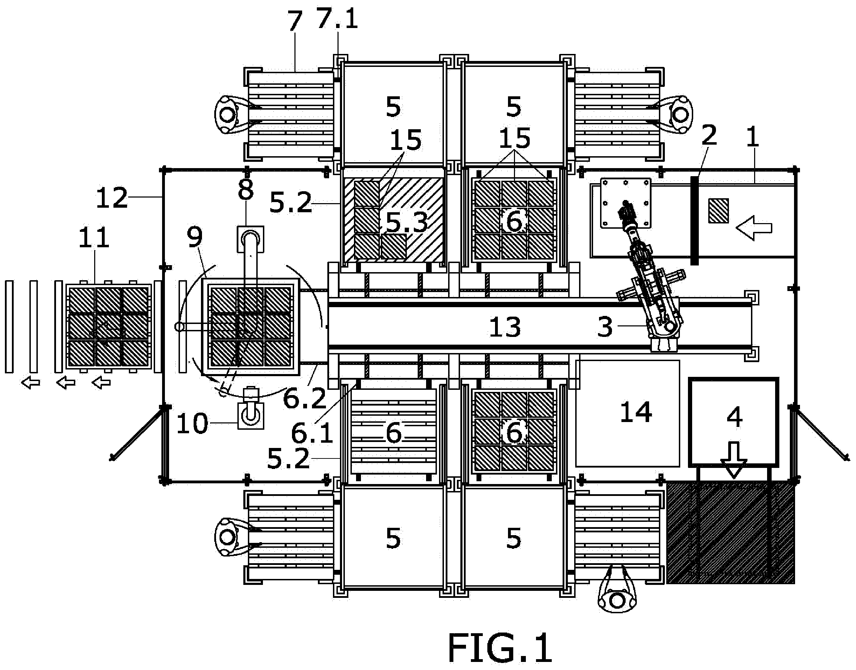

Figure 1 shows a first embodiment where the palletizing system comprises a series of interconnected modules, with a central part (13) that has a first zone on which handling means are provided in the form of a robot collector or stacker (3) of the parts on trays (5.3); on one side of the central zone (13) a feeding module (1) is arranged that is followed by a scanning module (2); opposite and on the other side of the central zone (13) are a robot maintenance area (14) and an invalid part rejection area (4). After said first zone of the central part (13), a second zone or intermediate zone is arranged that, in the embodiment shown and in a non-limiting manner, has two palletizing modules on which pallets (6) are arranged, said palletizing modules being arranged opposite each other, and after these there are tray storage modules (5). Finally, the central part (13) has a wrapping, weighing and labelling module followed by an outlet and loading module or zone (11).

Next to the tray storage modules (5) are storage areas (7) for the pallets (6).

The feeding module (1) receives the parts to be palletized, ensuring a continuous flow towards a scanning module (2) arranged after the feeding module. In this scanning module (2) the parts are scanned according to their geometry, position and thickness, and once the data of said parts have been identified the collector or stacker robot (3) using gripping means grabs each of the parts and transports them towards trays (5.3) placed on the palletizing module (6).

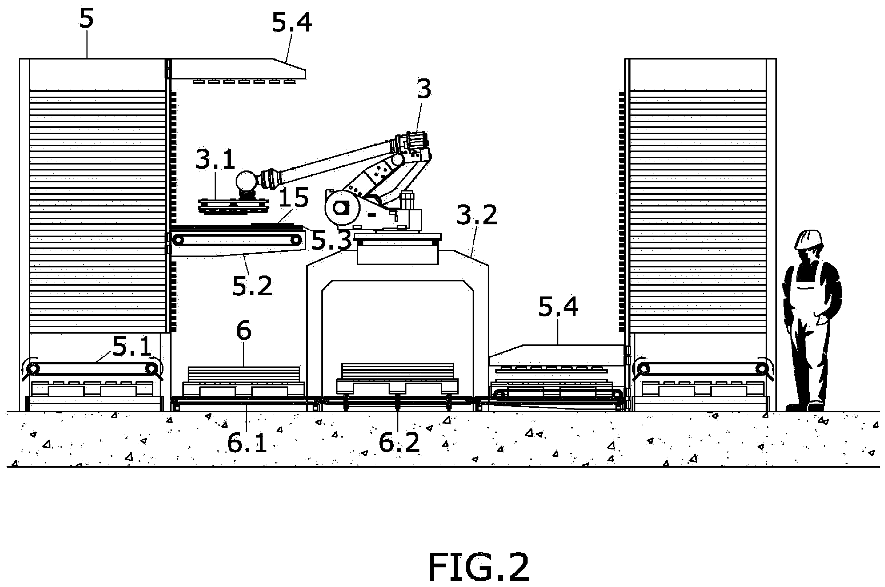

The gripping means of the collector or stacker robot (3) may be any of the known ones, such as magnets or suckers (3.1) (figure 2).

The storage modules (5) for trays (5.3) are places where the trays (5.3) are temporarily loaded or unloaded. In the storage module (5) the trays (5.3) are stacked vertically but separated from each other.

The means used to remove and replace the trays (5.3) in the stack of trays are motorised chains that allow the trays (5.3) to enter or exit each of the storage modules (5) of trays (5.3).

The movement of the pallets (6) from the storage area (7) for the pallets (6) to the palletization area is carried out, preferably but limited to, by a first set of chains (7.1) that advance the pallets (6) from the storage area towards the storage modules (5); and by means of a second set of chains (5.1) that advance the pallets (6) from the storage modules (5) towards the central part (13) of the system.

Once each pallet (6) has been placed in the palletization area, the metal parts are placed by means of the robot (3).

Associated with the storage modules are palletizing modules provided with palletizers comprising first arms (5.2) for positioning the extracted trays (5.3). The arms (5.2) run vertically along the height of the storage modules (5) and serve to support the trays (5.3) once extracted. Also, the storage modules (5) have second arms (5.4) for gripping the parts (15) placed on each tray (5.3).

These second arms (5.4), as can be seen in figure 2, are meant to collect the parts from each tray (5.3) previously extracted from the storage module (5). For this purpose, each tray (5.3) is extracted from the storage module (5) by means of the motorized chains associated with each tray (5.3), then the second arms (5.4) descend and by means of gripping means (magnets, suction cups, etc.) grab all the parts (15) of each tray. Then the first arms (5.2) descend to the floor level where the pallets (6) are arranged, proceeding to lower the second arms (5.4) all the parts (15) are placed on the pallet (6).

Once each pallet (6) has been completed, a first set of chains (6.1) (figure 2) extracts each pallet (6) towards the central part (13) and from here the pallets are carried towards the wrapping, weighing and labelling module, using a second set of chains (6.2), where there are rotary wrapping means (8), weighing means (9) and labelling means (10).

Finally, the wrapped, weighed and labelled pallets (6) are moved towards the outlet and loading module (11).

The central part (13) of the system, the feeding module (1), the scanning module (2), the robot collector or stacker (3) of the parts (15), the rejection area (4), the robot maintenance area (14), the palletizing modules and the wrapping, weighing and labelling module, are all inside a closed enclosure defined by a fence (12), so that it is not possible to enter it thereby preventing unwanted accidents.

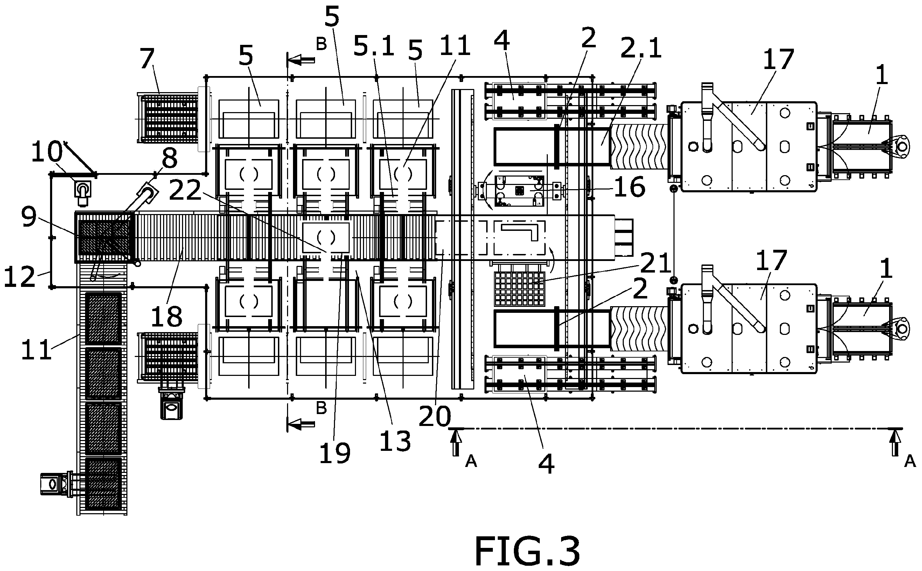

Figure 3 shows a second embodiment in which it should be noted that the feeding module (1) is composed of two feeding tables, after which the parts are passed through deburring zones (17), each feeding module (1) and deburring zone (17) assembly being associated with respective scanners (2), a conveyor (16) being used as handling means to transport the parts from the outlet of the scanners (2) to a distribution module (19) placed in the central part (13) of the system.

The conveyor (16) carries the parts after the outlet from the scanners (2) either towards rejection zones (4) placed at the ends of the actuation zone of the conveyor (16) or towards a turning zone (21), or towards the distribution conveyor (19) placed in the central part (13) of the system.

At one end of the central part (16) of the system there is arranged one or more containers (22) of parts which are not to be palletised, specifically because they are parts smaller than certain dimensions.

Said containers (22) receive the parts that have previously been placed by the conveyor (16) on the belt of the central part (13), making the belt work backwards so that said parts fall into said containers (22).

As in the embodiment shown in figures 1 and 2, corresponding to the first embodiment, it can be seen that there are tray storage modules (5) in connection with storage areas (7) for pallets (6), which are extracted towards the palletizing area by means of the second set of chains (5.1).

Associated with each tray storage module (5) is a palletizer (n), each one comprising the first arm (5.2) and the second arm (5.4), which has a means of gripping the parts; in the embodiment shown this second arm has a deployable section (5.5), provided with gripping means so as to allow grab the parts arranged on the trays (5.3) placed on the first arms (5.2) and leave the parts on the pallets (6).

Once each pallet (6) is completed, the chain conveyor (15) extracts it under the distribution conveyor (19) until it reaches a collection conveyor (18) where each pallet (6) is taken and slowly transports it to the rotary wrapping area (8) where the weighing means (9) and labelling means (10) are located, such as those used in Figures 1 and 2.

The wrapping module rotates around the pallet to prevent the parts from falling. The wrapped pallet is labeled by an automatic printer that places an adhesive label on the plastic wrap. When the pallet (6) is ready, the extraction system formed by chains or rollers moves it towards the outlet and loading area (11).

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Automatic palletizing system for metal parts comprising a series of interconnected modules **characterised in that** it comprises a central part (13) having a first zone on which part handling means are arranged for the arrangement thereof on trays (5.3); on one side of the central zone (13) a feeding module (1) is arranged which is followed by scanning means (2), opposite and on the other side of the central zone (13) a rejection area (4) for invalid parts is arranged; after said first zone of the central part (13) a second zone or intermediate zone is arranged which has several palletizing modules on each side of the central part (13) where each palletizing module comprises a palletizer, where the pallets (6) are arranged in said palletizing modules; said palletizing modules are arranged opposite each other and behind them are tray storage modules (5); finally, the central part (13) has a wrapping, weighing and labelling module followed by an outlet and loading module or zone (11), where the palletizers associated with the storage modules have first arms (5.2) for positioning the extracted trays (5.3), where said first arms (5.2) run vertically along the height of the storage modules (5) and serve to support the trays (5.3) once extracted, and also have second arms (5.4) for gripping the parts (14) placed on each tray (5.3).

2. Automatic palletizing system for metal parts according to claim 1, **characterized in that** the scanning means (2) are arranged after the feeding module and are in charge of identifying the contour and the position of each part, performing a dimensional verification and thickness measurement and accepting or rejecting parts according to their geometry and the manufacturing tolerances

3. Automatic palletizing system for metal parts according to claim 1 or 2, **characterized in that** pallet (6) storage areas (7) are arranged next to the tray storage modules (5), where the movement of the pallets (6) from the pallet storage area (7) to the palletization area is carried out, by a first set of chains (7.1) that advance the pallets (6) from the storage area towards the tray storage modules (5) and by means of a second set of chains (5.1) that advances the pallets (6) from the storage modules (5) towards the central part (13) of the system.

4. Automatic palletizing system for metal parts according to any of the preceding claims, **characterized in that** the system comprises a first set of chains (6.1) that removes each pallet (6) towards the central part (13) and a second set of chains (6.2) that carries the pallets towards the wrapping, weighing and labelling module.

5. Automatic palletizing system for metal parts according to any of the preceding claims, **characterized in that** the wrapping, weighing and labelling module has rotary wrapping means (8), weighing means (9) and labelling means (10) respectively.

6. Automatic palletizing system for metal parts according to any of the preceding claims, **characterized in that** both the central part (13) of the system and the feeding module (1), the scanning means (2), the robot collector or stacker (3) of the parts (15), the rejection area (4), and the robot maintenance area (14), the palletizing modules and the wrapping, weighing and labelling module, are located inside a closed enclosure formed by a fence (12).

7. Automatic palletizing system for metal parts according to any of the preceding claims **characterised in that** the part handling means consist of a picker or stacker robot (3) for the parts.

8. Automatic palletizing system for metal parts according to any of claims 1 to 6 **characterised in that** the part handling means consist of manipulator (16) that transport the parts from the outlet of the scanners (2) to a distribution module (19) positioned in the central part (13) of the system.

9. Automatic palletizing system for metal parts according to claim 8 **characterized in that** the feeding module (1) is composed of two feeding tables, after which the parts are passed through deburring zones (17), each assembly of feeding module (1) and deburring zones (17) being associated with respective scanners (2)

10. Automatic palletizing system for metal parts according to claim 10 **characterised in that** the conveyor (16) carries the parts after the outlet from the scanners (2), either towards the rejection zones (4) positioned at the ends of the actuation zone of the manipulator (16) or towards a turning zone (21), or towards the distribution conveyor (19) positioned in the central part (13) of the system.

11. Automatic palletizing system for metal parts according to claim 8 or 9 or 10, **characterised in that** the second arm (5.4) of the palletizers associated with the storage modules has part gripping means, where this second arm has a deployable section (5.5) provided with the gripping means so as to allow gripping the parts arranged on the trays (5.3) placed on the first arms (5.2) and leaving the parts on the pallets (6).

## Amended claims

### Amended claims under Art. 19.1 PCT

1. Automatic palletizing system for metal parts comprising a series of interconnected modules having a central zone (13) having a first zone on which part handling means are arranged for the arrangement thereof on trays (5.3); on one side of the central zone (13) a feeding module (1) is arranged which is followed by scanning means (2), opposite and on the other side of the central zone (13) a rejection area (4) for invalid parts is arranged; after said first zone of the central zone (13) a second zone or intermediate zone is arranged which has several palletizing modules on each side of the central zone (13) where each palletizing module comprises a palletizer, where the pallets (6) are arranged in said palletizing modules;
**characterized in that**
said palletizing modules are arranged opposite each other and behind them are tray storage modules (5); finally, the central zone (13) has a wrapping, weighing and labelling module followed by an outlet and loading module or zone (11), where the palletizers associated with the storage modules have first arms (5.2) for positioning the extracted trays (5.3), where said first arms (5.2) run vertically along the height of the storage modules (5) and serve to support the trays (5.3) once extracted, and also have second arms (5.4) for gripping the parts (14) placed on each tray (5.3).

2. Automatic palletizing system for metal parts according to claim 1, **characterized in that** the scanning means (2) are arranged after the feeding module and are in charge of identifying the contour and the position of each part, performing a dimensional verification and thickness measurement and accepting or rejecting parts according to their geometry and the manufacturing tolerances

3. Automatic palletizing system for metal parts according to claim 1 or 2, **characterized in that** pallet (6) storage areas (7) are arranged next to the tray storage modules (5), where the movement of the pallets (6) from the pallet storage area (7) to the palletization area is carried out, by a first set of chains (7.1) that advance the pallets (6) from the storage area towards the tray storage modules (5) and by means of a second set of chains (5.1) that advances the pallets (6) from the storage modules (5) towards the central zone (13) of the system.

4. Automatic palletizing system for metal parts according to any of the preceding claims, **characterized in that** the system comprises a first set of chains (6.1) that removes each pallet (6) towards the central zone (13) and a second set of chains (6.2) that carries the pallets towards the wrapping, weighing and labelling module.

5. Automatic palletizing system for metal parts according to any of the preceding claims, **characterized in that** the wrapping, weighing and labelling module has rotary wrapping means (8), weighing means (9) and labelling means (10) respectively.

6. Automatic palletizing system for metal parts according to any of the preceding claims, **characterized in that** both the central zone (13) of the system and the feeding module (1), the scanning means (2), the handling means of the parts (15), the rejection area (4), and a robot maintenance area (14), the palletizing modules and the wrapping, weighing and labelling module, are located inside a closed enclosure formed by a fence (12).

7. Automatic palletizing system for metal parts according to any of the preceding claims **characterised in that** the part handling means consist of a robot collector or stacker (3) for the parts.

8. Automatic palletizing system for metal parts according to any of claims 1 to 6 **characterised in that** the part handling means consist of conveyor (16) that transport the parts from the outlet of the scanners (2) to a distribution module (19) positioned in the central zone (13) of the system.

9. Automatic palletizing system for metal parts according to claim 8 **characterized in that** the feeding module (1) is composed of two feeding tables, after which the parts are passed through deburring zones (17), each assembly of feeding module (1) and deburring zones (17) being associated with respective scanners (2)

10. Automatic palletizing system for metal parts according to claim 8 or 9 **characterised in that** the conveyor (16) carries the parts after the outlet from the scanners (2), either towards the rejection zones (4) positioned at the ends of the actuation zone of the conveyor (16) or towards a turning zone (21), or towards the distribution module (19) positioned in the central zone (13) of the system.

11. Automatic palletizing system for metal parts according to claim 8 or 9 or 10, **characterised in that** the second arm (5.4) of the palletizers associated with the storage modules has part gripping means, where this second arm has a deployable section (5.5) provided with the gripping means so as to allow gripping the parts arranged on the trays (5.3) placed on the first arms (5.2) and leaving the parts on the pallets (6).
